# EUROPEAN PATENT APPLICATION

(11) **EP 4 835 828 A1**
(43) Date of publication of application: **04.11.2026**
(21) Application number: 26169250.3
(22) Date of filing: 30.03.2026
(51) Int. Cl.: G06T 12/20

(54) **IMAGE RECONSTRUCTION**

(30) Priority: 01.05.2025 GB 202506705
(71) Applicant: Elekta Limited, Crawley, West Sussex RH10 9BL (GB)
(72) Inventor: MASON, Jonathan, Crawley, RH10 9BL (GB); LONG, Andrew, Crawley, RH10 9BL (GB); LOMAX, Wayne, Crawley, RH10 9BL (GB); STANCANELLO, Joseph, Crawley, RH10 9BL (GB)
(74) Representative: Haseltine Lake Kempner LLP

(57) **Abstract**

A computer-implemented method (100) for generating a three-dimensional, 3D, reconstructed image of a patient, the method comprising: obtaining (102) a first plurality of two-dimensional, 2D, Cone Beam Computed Tomography, CBCT, projections of the patient, wherein the first plurality of 2D CBCT projections correspond to a first plurality of angular positions of a CBCT imaging source around a first centre of rotation with a first relative position of the patient with respect to the first centre of rotation; obtaining (104) a second plurality of 2D CBCT projections of the patient, wherein the second plurality of 2D CBCT projections correspond to a second plurality of angular positions of the CBCT imaging source around a second centre of rotation with a second relative position of the patient with respect to the second centre of rotation, wherein the second relative position is different to the first relative position; and performing (106), using the first and second plurality of 2D CBCT projections, an iterative image reconstruction procedure to generate a 3D reconstructed image of a volume of the patient, wherein a subregion of the volume of the patient is represented in both the first plurality of 2D CBCT projections and the second plurality of 2D CBCT projections.

## Description

### Technical Field

Embodiments of the present disclosure relate to methods, apparatuses and systems for generating a three-dimensional (3D) reconstructed image of a patient using Cone Beam Computed Tomography (CBCT) projections. More specifically, embodiments of the disclosure relate to a computer-implemented method for generating a 3D reconstructed image of a patient, a method performed by an imaging system for generating a 3D reconstructed image of a patient, a node, an imaging system, and a computer program product configured to execute a method for generating a 3D reconstructed image of a patient.

### Background

Radiation therapy (RT), also referred to as radiotherapy, is the use of ionising radiation to damage or destroy unhealthy cells in a human or animal body. During treatment, the ionising radiation is directed to unhealthy cells in the body, such as a tumour.

Imaging is an important aspect of RT. Images of the patient are used for treatment planning, patient alignment (ahead of and during treatment), and monitoring the impact of the treatment (during and after treatment). Cone Beam Computed Tomography (CBCT) is a widely used imaging modality for radiotherapy applications. CBCT image acquisition involves performing a CBCT scan in which two-dimensional (2D) projections of the patient are obtained from a series of different projection angles, e.g., along an arc. CBCT image reconstruction involves processing the raw data from the CBCT scan into a 3D reconstructed CBCT image. Example reconstruction techniques include analytic methods based on Filtered back-projection (FBP) (e.g., the Feldkamp-Davis-Kress (FDK) algorithm), and iterative methods such as Simultaneous Algebraic Reconstruction Technique (SART) and Statistical Iterative Reconstruction.

RT is performed in accordance with a radiotherapy treatment plan for delivering a radiation dose distribution to the patient to achieve a set of radiotherapy treatment objectives. The radiotherapy treatment objectives may, for example, include: a minimum radiation dose that is to be delivered to the tumour, an upper limit on radiation dose that is to be delivered to a healthy organ that is at risk of radiation damage, and an upper limit on the total radiation dose that is to be delivered to the patient. The delivered dose distribution depends on treatment parameters such as the beam direction, dose per beam energy, number of beams, beamlet weights, and exposure time. A region identified as needing treatment (e.g., a region comprising a tumour) is referred to as a clinical target volume (CTV). A region to which treatment is to be delivered is referred to as the planning target volume (PTV) and is typically the CTV plus some margin that is added to help ensure that the CTV is treated effectively. A region in which a treatment dose is undesirable is referred to as an organ at risk (OAR).

Radiotherapy treatment planning is the process of determining a radiotherapy treatment plan for delivering a suitable dose distribution that will meet the radiotherapy treatment objectives. During radiotherapy treatment planning, an anatomical region of the patient is modelled using a three-dimensional image of the patient, e.g., a computed tomography (CT) image or a CBCT image. Image segmentation is performed to define different regions within the image, referred to as segments, and different objectives and constraints may be defined for different segments. The result of the radiotherapy treatment planning is a radiotherapy treatment plan indicating a configuration and/or delivery sequence for a radiotherapy system for delivering a radiation dose distribution to the patient. For example, the radiotherapy treatment plan may include parameters specifying, for example, the direction, cross-sectional shape, energy and intensity of each radiation beam to be applied to the patient. The radiotherapy treatment plan may include dose fractioning, in which a sequence of radiotherapy treatments is provided over a predetermined period of time, with each treatment delivering a specified fraction of the total prescribed dose. For example, the total radiation dose may be divided into around 3 to 40 daily fractions. Radiotherapy treatment planning may be performed using a treatment planning system, such as Monaco^{®}. Radiotherapy treatment planning may also be referred to as radiation treatment planning or treatment planning. A radiotherapy treatment plan may also be referred to as a radiation treatment plan or a treatment plan.

Image guided RT (IGRT) is a technique to capture the anatomy of the patient at the time of dose fraction delivery using in-room imaging, and to accurately align the planned dose distribution with the patient anatomy to increase the accuracy of the treatment. Cone Beam Computed Tomography (CBCT) is the most widely used imaging modality for IGRT.

Adaptive radiotherapy (ART) is a technique that uses imaging (e.g., CBCT imaging) to evaluate and adapt the radiotherapy treatment plan. In inter-fraction ART, images obtained during a RT treatment session are analysed offline and used to adjust the radiotherapy treatment plan for future sessions (i.e., the changes are made between fractions). In intra-fraction ART, images obtained during a RT treatment session are analysed online (i.e., in real time during the session) and used to adjust the radiotherapy treatment plan for that session (i.e., the changes are made during a fraction). ART can thereby increase the accuracy of RT treatment, e.g., by ensuring that the radiotherapy treatment plan accounts for any changes in patient anatomy.

**In** radiotherapy applications, CBCT images are commonly used to support patient alignment, treatment planning, and adaptive treatment. However, the field of view (FOV) is often insufficient to capture all the anatomy of interest.

Therefore, it is desirable to provide improved techniques for generating CBCT images.

The present disclosure seeks to address these and other disadvantages encountered in the prior art.

### Summary

An invention is defined in the independent claims. Optional features are set out in the dependent claims.

Embodiments of the disclosure may be implemented in digital electronic circuitry, or in computer hardware, firmware, software, or in combinations thereof. Embodiments of the disclosure may be implemented as a computer program or a computer program product, i.e., a computer program tangibly embodied in a non-transitory information carrier, e.g., in a machine-readable storage device or in a propagated signal, for execution by, or to control the operation of, one or more hardware modules. A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The disclosure is set out herein in terms of particular embodiments. Other embodiments, not explicitly described here, may nonetheless fall within the scope of the claims. Unless explicitly or implicitly specified otherwise, the steps of methods according to embodiments of the disclosure may be performed in a different order and still achieve desirable results.

### Brief description of the drawings

Specific embodiments are now described, by way of example only, with reference to the drawings, in which:
Figure 1 is a flow chart of a computer-implemented method for generating a 3D reconstructed image of a patient according to the present disclosure;
Figure 2 is a flow chart of a method performed by an imaging system for generating a 3D reconstructed image of a patient according to the present disclosure;
Figure 3 is a schematic illustration of techniques according to the present disclosure;
Figure 4 is a schematic illustration of techniques according to the present disclosure;
Figure 5A is an image showing a reconstructed volume obtained according to techniques of the present disclosure;
Figure 5B is an image showing a reconstructed volume for comparison purposes;
Figure 6A is a schematic illustration of techniques according to the present disclosure;
Figure 6B is a schematic illustration of techniques according to the present disclosure;
Figure 7 is a schematic illustration of techniques according to the present disclosure;
Figure 8 is a diagram of the geometric arrangement for cone beam projection acquisition and reconstruction;
Figure 9 is a diagram of a cone beam CT scanner;
Figure 10 is a block diagram illustrating an image node according to the present disclosure;
Figure 11 is a schematic illustration of a radiotherapy apparatus; and
Figure 12 is a block diagram illustrating a radiotherapy system suitable for generating a 3D reconstructed image of a patient according to the present disclosure.

### Detailed Description

CBCT imaging is increasingly being used to support, IGRT, adaptive radiotherapy treatment and larger treatment fields. Consequently, there is a demand for larger CBCT FOVs.

To address this, it is known to stitch two reconstructed volumes together. In other words, two volumes are reconstructed based on two CBCT scans, and these volumes are subsequently merged. However, this approach requires a large overlap (a region of the patient that is scanned twice) between the two CBCT scans to facilitate the merge, which results in a larger dose being delivered to the patient in this region.

Some imaging systems are configured to use slip-ring technology to perform multiple rotations of the imaging arm. Thus, with these systems it is possible to perform a helical scan in which the imaging source continuously rotates while the patient couch is continuously moved along the rotation axis of the imaging source. This results in a longer FOV (along the rotation axis) but requires a specialised imaging apparatus that can perform more than one 360-degree rotation in the same direction (e.g., the ability to continue rotating in the same direction through several 360-degree rotations). This is not possible with many radiotherapy systems (e.g., systems without slip-ring technology). Furthermore, helical scans can only extend the FOV in the longitudinal direction.

The present disclosure addresses these and other challenges.

In overview, and without limitation, the present disclosure relates to a method of extending the usable CBCT field of view. This is accomplished by acquiring at least two CBCT acquisitions in succession with different relative positions of the patient with respect to the imaging apparatus, and performing a single reconstruction using the 2D projections collected from the at least two CBCT acquisitions to yield a single reconstructed volume. Thus, a larger field of view is achieved compared to a reconstruction that uses only one CBCT acquisition with the patient in one position relative to the imaging apparatus. Furthermore, the FOV can be extended in any direction based on the displacement direction between the different relative positions of the patient.

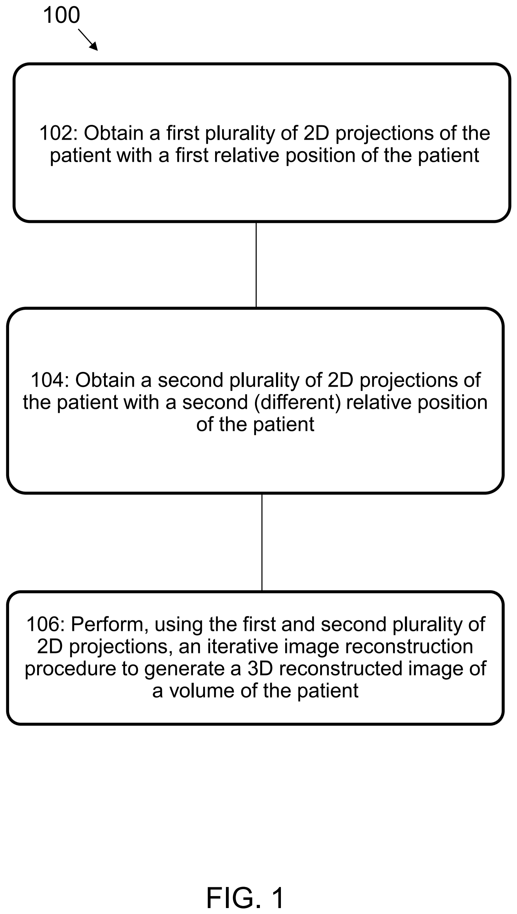

**Figure 1** is a flow chart showing a computer-implemented method 100 for generating a 3D reconstructed image of a patient.

At step 102, the method 100 comprises obtaining a first plurality of two-dimensional (2D) CBCT projections of the patient. The first plurality of 2D CBCT projections correspond to a first plurality of angular positions of a CBCT imaging source around a first centre of rotation with a first relative position of the patient with respect to the first centre of rotation. Step 102 may further comprise obtaining a first indication of the first relative position of the patient with respect to the first centre of rotation.

At step 104, the method 100 comprises obtaining a second plurality of 2D CBCT projections of the patient. The second plurality of 2D CBCT projections correspond to a second plurality of angular positions of the CBCT imaging source around a second centre of rotation with a second relative position of the patient with respect to the second centre of rotation. The second relative position is different to the first relative position. Step 104 may further comprise obtaining a second indication of the second relative position of the patient with respect to the second centre of rotation.

Step 104 may be performed before, after or at substantially the same time as step 102.

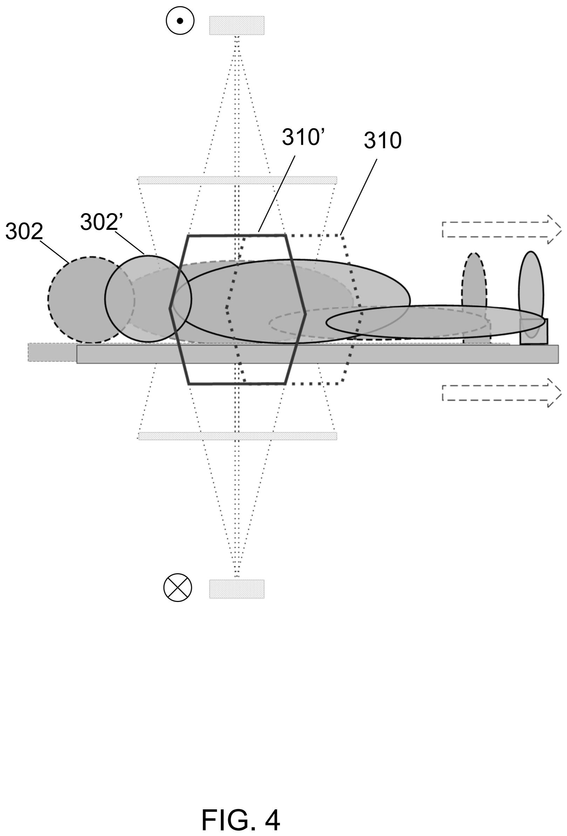

A displacement direction from the first relative position to the second relative position may have at least a component that is parallel to a rotation axis of the first plurality of 2D angular projections. For example, the displacement direction may be parallel to the rotation axis, which is referred to herein as a longitudinal displacement (an example longitudinal displacement is depicted and described with reference to Figure 4).

The displacement direction from the first relative position to the second relative position may have at least a component that is perpendicular to a rotation axis of the first plurality of 2D angular projections. For example, the displacement direction may be lateral (perpendicular to the rotation axis in the horizontal plane) or the displacement direction may be vertical. Alternatively, the displacement direction may be a combination of longitudinal, horizontal and lateral displacements.

The displacement direction from the first relative position to the second relative position may be defined relative to the anatomy of the patient. For example, the displacement direction from the first relative position to the second relative position may have at least a component that is parallel to the superior-inferior axis of the patient (i.e., the axis at the intersection of the patient's sagittal plane and coronal (frontal) plane). For example, the displacement direction from the first relative position to the second relative position may be parallel to the superior-inferior axis of the patient. The displacement direction from the first relative position to the second relative position may have at least a component that is parallel to the axis at the intersection of the patient's coronal (frontal) plane and transverse plane. The displacement direction from the first relative position to the second relative position may have at least a component that is parallel to the axis at the intersection of the patient's sagittal plane and transverse plane.

One or both of the first plurality of 2D CBCT projections and the second plurality of 2D CBCT projections may correspond to a complete CBCT scan. A complete scan is a scan comprising a plurality of projections having a sufficient angular range to unambiguously reconstruct a complete 3D volume (e.g., of the anatomical region of interest in the FOV of that scan). The skilled person will appreciate that the angular range that is sufficient to obtain an unambiguous reconstruction depends on the anatomical region that is to be reconstructed. For example, an unambiguous reconstruction of many regions (e.g., larger regions such as the neck and shoulders, chest, abdomen, or pelvis) may require projections with a 360-degree angular range, whereas an unambiguous reconstruction of other regions (e.g., smaller regions such as the head) may only require projections with a smaller angular range (e.g., 180 degrees plus the fan angle for anatomical regions that don't require a detector offset).

At step 106, the method 100 further comprises performing, using the first and second plurality of 2D CBCT projections, an iterative image reconstruction procedure to generate a 3D reconstructed image of a volume of the patient. A subregion of the volume of the patient is represented in both the first plurality of 2D CBCT projections and the second plurality of 2D CBCT projections. This subregion (the region of the volume that is projected in both the first set of projections and the second set of projections) may be referred to as the overlap.

The iterative image reconstruction procedure may be performed using a first indication of the first relative position of the patient with respect to the first centre of rotation and a second indication of the first relative position of the patient with respect to the second centre of rotation. The first and second indications (of the first and second relative positions) may be obtained from hardware position measurements. In other words, they may correspond to (or be derived from) in-situ measurements of the patient position. This improves the accuracy of the position measurements and reduces the risk of human error (e.g., the risk of a user inputting an incorrect position via a user interface). This in turn improves the accuracy of the reconstructed image of the volume of the patient generated in step 106.

Performing the iterative image reconstruction procedure at step 106 may comprise generating a simulation of the first and second plurality of 2D CBCT projections using a current estimate 3D image of the patient volume. In the first iteration of the iterative image reconstruction procedure, the current estimate 3D image of the patient volume may comprise an initial estimate, e.g., a blank image or an image generated using an analytic reconstruction method. For subsequent iterations, the current estimate 3D image may comprise the output of the previous iteration.

Performing the iterative image reconstruction procedure at step 106 may further comprise generating an error function in projection space as a function of the simulated 2D CBCT projections and the first and second plurality of 2D CBCT projections. For example, the error function may comprise a residual (a difference between the simulated and measured projections). Alternatively, the error function may comprise a ratio of the simulated and measured projections. The error function is in projection space, e.g., the error function may be represented with a tensor having the same dimensions as a tensor used to represent the measured projections (i.e., the first and second plurality of 2D CBCT projections).

Performing the iterative image reconstruction procedure at step 106 may further comprise updating the current estimate 3D image of the patient volume based on the error function. For example, updating the current estimate 3D image may comprise performing a gradient descent method. The gradient descent method may be based on a cost function, where the cost function is based on the error function.

Performing the iterative image reconstruction procedure may further comprise applying a weighting factor elementwise to the error function to generate a weighted error function. The weighting factor is defined in projection space. The weighting factor may be such that one or more elements of the error function corresponding to positions in projection space that represent the subregion are weighted less than the remaining elements of the error function. For example, all elements of the error function that correspond to positions in projection space that represent the subregion may be weighted less than all remaining elements of the error function. A position in projection space that represents the subregion is a position on the detector onto which the subregion is projected (in the first or the second plurality of 2D CBCT projections). An element of the error function that corresponds to a given position in projection space is the element of the error function that is a function of the simulated 2D CBCT projection at that given position in projection space and the first and second plurality of 2D CBCT projections at that given position in projection space. The weighting factor may comprise a tapered weighting factor.

The weighting factor advantageously reduces artifacts from inconsistencies in the subregion (i.e.., the region that is scanned in both acquisitions). Inconsistencies between the first and second acquisitions may arise due to the difference in projection angles and path taken by the X-rays. For example, inconsistencies may arise due to a difference in scatter. Inconsistencies may also or instead be caused by the time difference between the first and second acquisitions. For example, inconsistencies may be caused by patient movement, e.g., due to breathing and/or involuntary movements such as twitching.

The weighting factor also helps to account for nonspatial sampling, i.e., the fact that more projection data is collected for the subregion than for the remaining patient volume. Without the weighting factor, nonspatial sampling can cause the overlap region to converge much faster during iterative reconstruction than the remaining patient volume and subsequently diverge (overshoot) with subsequent iterations. This can cause the iterative reconstruction to take a long time to reach convergence overall (i.e., for the entire patient volume). The weighting factor helps to recover uniform convergence.

In embodiments that apply a weighting factor, updating the current estimate 3D image of the patient volume based on the error function may comprise updating the current estimate 3D image of the patient volume based on the weighted error function.

For longitudinal displacements, the weighting factor for elements of the error function that correspond to positions in the first plurality of projections reduces as a function of position in the displacement direction, and the weighting factor for elements of the error function that correspond to positions in the second plurality of projections reduces as a function of position in the opposite direction to the displacement direction. For example, for each projection, the weighting factor for elements corresponding to positions in projection space that represent the subregion may reduce as a function of position in a direction along the rotation axis towards the edge of the detector (i.e., the edge of the detector onto which part of the subregion is projected). For example, for each projection, the weighting factor may be tapered towards the edge of the detector.

Step 108 of performing the iterative image reconstruction procedure may comprise (e.g., the step of updating the current estimate 3D image of the patient volume may comprise) generating an image update in image space. The image update may be generated based on the error function. In examples in which a weighting function is applied to the error function, the image update may be generated based on the weighted error function.

Performing the iterative image reconstruction procedure may further comprise (e.g., the step of updating the current estimate 3D image of the patient volume may further comprise) applying an element-wise preconditioner to the image update. The preconditioner is a function of position in image space.

Performing the iterative image reconstruction procedure may further comprise (e.g., the step of updating the current estimate 3D image of the patient volume may further comprise) updating the current estimate 3D image of the patient volume using the preconditioned image update.

Preconditioning advantageously acts to recover unform convergence and thereby speed up the rate of convergence, particularly for longitudinal displacements. Thus, the 3D reconstructed image is generated in fewer iterations.

An example of the method 100 of Figure 1 may be expressed mathematically as follows.

For each iteration of the iterative reconstruction procedure, the plurality of 2D CBCT projections may be simulated (*yₛᵢₘ*) assuming a linear model (e.g., *yₛᵢₘ = Ax^{k}* ) or a nonlinear model (e.g., *yₛᵢₘ = p*(*x^{k}*))*. A* is a system projection matrix (also referred to as a forward projection operator) describing a combination of each image pixel at each detector element. *p*(*x^{k}*) is the Polyquant forward projection function: $p \left({x}^{k}\right) = \left(1/\left(\int {FΩ}_{i} \left(F\right) dF\right)\right) \int {FΩ}_{i} \left(F\right) exp \left(-{q}_{i}\left({x}^{k}, F\right)\right) dF$ where *qᵢ*(*x^{k},F*) *= Aµ*(*x, F*) where *µ* is the linear attenuation coefficient as a piecewise linear function of *x^{k}* and energy *F* (the integrals integrate over the energy spectrum). The function Ω*ᵢ*(F) is the X-ray flux for a given energy. Further information about the Polyquant forward projection function can be found in J. H. Mason et al., Phys. Med. Biol. 62 (2017) 8739-8762 (see in particular equation 15), and US11915346B2. The simulation may further model scatter, (e.g., *yₛᵢₘ = p*(*x^{k}*) + *s*, where s is an estimate of X-ray background scatter).

An error function, *E,* may be generated based on the measured set of projections (including both the first and second set of projections) denoted y, and the simulated projections, *yₛᵢₘ*.

For each iteration, the current estimate 3D image may be updated based on the error function. For example, a method based on gradient descent may be performed as follows: ${x}^{k + 1} = {x}^{k} - Δ {A}^{T} E$

Here, *x^{k}* is the current estimate 3D image (e.g., represented as a tensor in image space), *x*^{*k+*1} is the updated estimate 3D image, *A* is the forward projection operator for modelling how a volume (in image space) is projected onto a set of 2D projections (in projection space), *A^{T}* is the transpose of *A*, Δ is a step size, and **Δ***A^{T} E* is the image update based on the error function.

For linear examples, the error function may be a residual: $E = {Ax}^{k} - y .$

An example error function using the Polyquant forward projection function is as follows: $E = \frac{y}{p \left({x}^{k}\right) + s} - 1$ where *p*(*x^{k}*) is the Polyquant forward projection function, s is an estimate of X-ray background scatter, and 1 is a volume filled with ones.

A further example error function, which may be used for penalized weighted least squares, is as follows: $diag \left(D\right) \left({Ax}^{k}-y\right)$ where D is a statistical weighting vector to down-weight measurements of high variance. For example, *D* = *y* is a common choice.

When a weighting factor, *W,* is applied (elementwise) to the error function, the iterative update to the current estimate (according to the present example) becomes: ${x}^{k + 1} = {x}^{k} - Δ {A}^{T} WE$

When a preconditioner, *Q*, is applied (elementwise) to the image update, the iterative update to the current estimate (according to the present example) becomes: ${x}^{k + 1} = {x}^{k} - \frac{Δ {A}^{T} E}{Q}$

When both a weighting factor and a preconditioner are applied, the iterative update to the current estimate (according to the present example) becomes: ${x}^{k + 1} = {x}^{k} - \frac{Δ {A}^{T} WE}{Q}$

Those skilled in the art will appreciate that other iterative reconstruction algorithms are also possible and the present disclosure is not limited to any particular algorithm. Other examples of optimization algorithms that could be used in the techniques disclosed herein are: coordinate descent; empirical methods such as "iterative filtered back projection"; and maximum likelihood expectation maximisation (MLEM). Furthermore, algebraic reconstruction technique (ART) (or Kaczmarz algorithm) may be used for inverting the linear system y = Ax.

The method of Figure 1 is described for two relative positions of the patient. Those skilled in the art will appreciate that the same method could also be applied for three (or more) relative positions of the patient by performing the image reconstruction procedure further using a third plurality of 2D projections of the patient acquired with the patient in the third relative position.

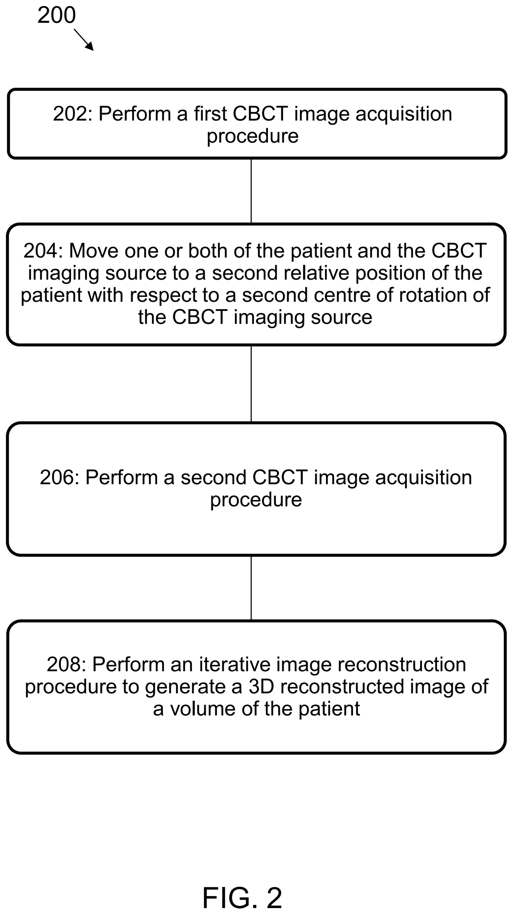

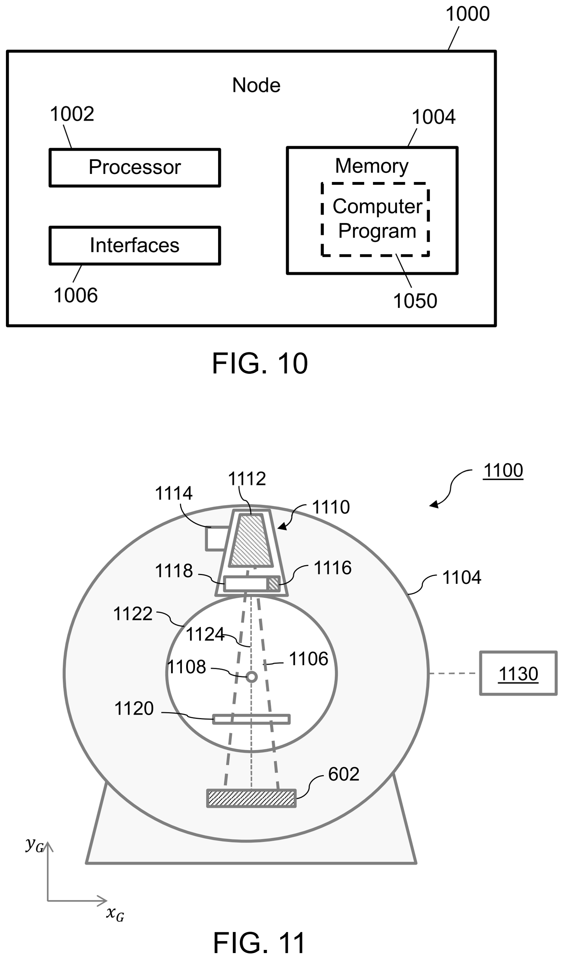

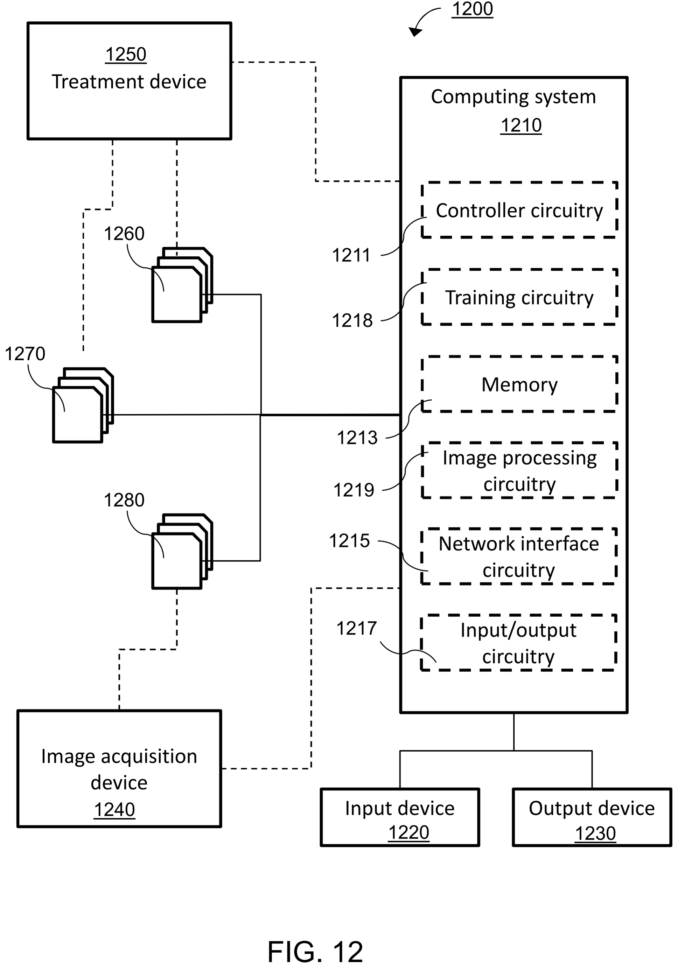

**Figure 2** is a flow chart showing a method 200 performed by an imaging system for generating a 3D reconstructed image of a patient. Example imaging systems are described with reference to Figure 11 and Figure 12. The imaging system may comprise the node 1000 described with reference to Figure 10. The imaging system may comprise a radiotherapy treatment device, such as the treatment device 1250 described with reference to Figure 12. Thus, the imaging system may also be referred to as a radiotherapy system. The treatment device 1250 may be, for example, a C-arm system or a ring-based system.

At step 202, the method 200 comprises performing a first CBCT image acquisition procedure comprising acquisition of a first plurality of two-dimensional, 2D, Cone Beam Computed Tomography, CBCT, projections of the patient corresponding to a first plurality of angular positions of a CBCT imaging source around a first centre of rotation with a first relative position of the patient with respect to the first centre of rotation. The first CBCT image acquisition procedure may be referred to as the first acquisition.

At step 204, the method 200 comprises moving one or both of the patient and the CBCT imaging source to a second relative position of the patient with respect to a second centre of rotation of the CBCT imaging source.

At step 206, the method 200 comprises performing a second CBCT image acquisition procedure comprising acquisition of a second plurality of 2D CBCT projections of the patient corresponding to a second plurality of angular positions of the CBCT imaging source around the second centre of rotation with the second relative position of the patient with respect to the second centre of rotation. The second CBCT image acquisition procedure may be referred to as the second acquisition.

2D processing such as gain, offset, lag, or scatter correction of the 2D projections may be performed inline (in parallel with steps 202-206). For example, 2D processing of the first plurality of 2D projections may be performed while the first plurality of 2D projections are being acquired, and 2D processing of the second plurality of 2D projections may be performed while the second plurality of 2D projections are being acquired.

At step 208, the method 200 comprises performing an iterative image reconstruction procedure to generate a 3D reconstructed image of a volume of the patient. The iterative image reconstruction procedure is performed using the first plurality of 2D CBCT projections and the second plurality of 2D CBCT projections. The iterative image reconstruction procedure may further use a first indication of the first relative position and a second indication of the second relative position. A subregion of the volume of the patient is represented in both the first plurality of 2D CBCT projections and the second plurality of 2D CBCT projections. This is referred to herein as the overlap region.

Moving one or both of the patient and the CBCT imaging source may comprise moving the patient. Thus, the centre of rotation of the CBCT imaging source remains unchanged (i.e., the first centre of rotation is equal to the second centre of rotation). The patient may be moved by moving a patient couch. The patient couch may be moved remotely. This allows the method 200 of Figure 2 to be performed without a human operator having to enter the imaging room (e.g., to manually perform the step 204). This reduces the opportunity for human error and reduces the time between the first and second acquisition. Reducing the time between the acquisitions is advantageous because it reduces the likelihood of unplanned patient movements occurring between the first acquisition and the second acquisition.

A position of the patient during acquisition of the second plurality of 2D CBCT projections may be a starting position for delivering radiotherapy treatment to the patient. The position of the patient here refers to the patient's absolute position, i.e., the patient's position in the room (e.g., relative to a non-moving component of the radiotherapy treatment device). This prevents the patient needing to be moved prior to starting radiotherapy treatment, and therefore reduces the time taken for the patient to be imaged and treated. This is beneficial for increasing the number of patients that can be imaged/treated using the imaging system. Moving the patient (e.g., by moving the patient couch) increases the likelihood of the patient moving (i.e., unplanned movements such as twitching or reacting to external stimuli). Therefore, reducing the number of times that the patient is moved also reduces the likelihood of unplanned patient movements.

Alternatively, moving one or both of the patient and the CBCT imaging source may comprise moving the CBCT imaging source (and detector) and keeping a position of a patient couch that is supporting the patient unchanged. As noted above, moving the patient (e.g., by moving the patient couch) increases the likelihood of disturbing the patient and the patient moving (i.e., unplanned movements such as twitching or reacting to external stimuli). Therefore, by keeping the patient stationary and moving the imaging apparatus, the likelihood of these unplanned patient movements is decreased. Thus, moving the imaging apparatus may in turn reduce image artefacts in the generated 3D reconstructed image of the patient volume.

The first CBCT image acquisition procedure may comprise acquiring the first plurality of 2D CBCT projections in a manner that is one of clockwise and anticlockwise, and the second CBCT image acquisition procedure may comprise acquiring the second plurality of 2D CBCT projections in a manner that is the other one of clockwise and anticlockwise. In other words, the first and second CBCT acquisitions may be performed in opposite directions (i.e., with the imaging source rotating in opposite directions). This reduces the time taken to obtain all of the 2D projections for the enlarged FOV.

The method 200 of Figure 2 may be performed responsive to a single user input command. This provides greater workflow efficiency. In particular, it reduces the risk of human error and decreases the time taken to perform the method 200.

The method 200 of Figure 2 may further comprise any one or more of the steps and features described with reference to the method 100 of Figure 1.

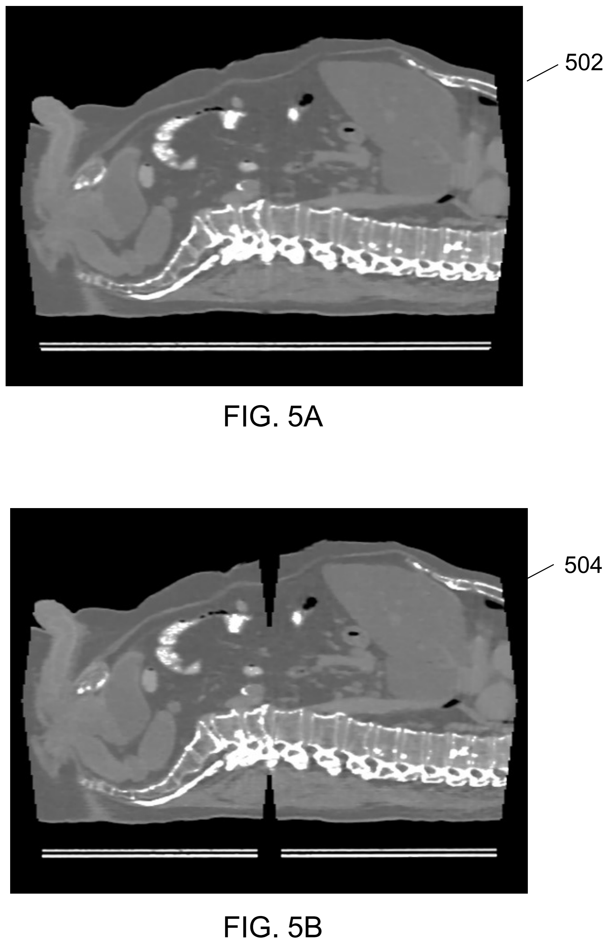

The method of Figure 2 is described for two relative positions of the patient. Those skilled in the art will appreciate that the same method could also be applied for three (or more) relative positions of the patient by performing a third CBCT image acquisition procedure with the patient in the third relative position and performing the image reconstruction procedure further using a third plurality of 2D projections of the patient acquired in the third CBCT image acquisition procedure. The use of CBCT projections (over, for example, fan beam CT) enables a larger anatomical region to be captured in a each projection, and therefore a significant anatomical region is captured using just two patient positions (as demonstrated below with reference to Figure 5A).

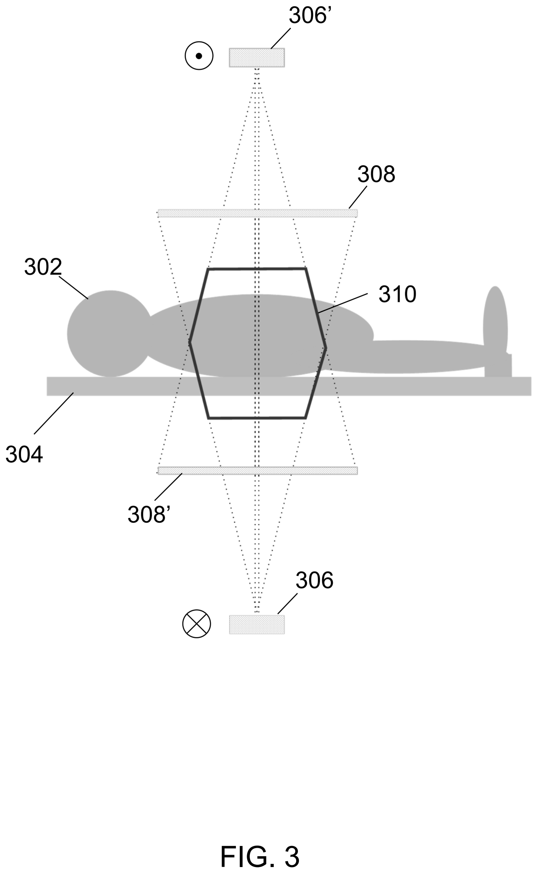

**Figure 3** is a schematic illustration of an example CBCT imaging setup.

A patient 302 lies on a patient couch 304, and an imaging source 306 is positioned opposite an imaging detector 308 with the patient 302 therebetween. During a CBCT image acquisition, the imaging source 306 and the imaging detector 308 are rotated around a centre of rotation, as shown by the directional vectors into and out of the page of Figure 3. A region of interest of the patient 302 is positioned at (e.g., around or near to) the centre of rotation. Figure 3 further shows the imaging source 306' and the imaging detector 308' after a 180-degree rotation.

The field of view 310 is determined by the volume swept out by the rotation of the detector 308, 308' about the patient 302. For example, the field of view 310 for a 40x40 cm detector located 1.6m from the source (and without further collimation) is a (roughly) cylindrical volume of length 20 cm with conical 'end caps' such that the maximum length of the FOV in the longitudinal direction is 26 cm. (Data outside this conical end-capped cylindrical FOV is insufficient for reconstruction and is therefore masked away, thus creating the conical end-capped cylindrical FOV).

According to a specific implementation of the techniques disclosed herein, a second FOV is obtained by translating the patient 302 longitudinally (i.e., parallel to the rotation axis of the imaging system), as shown in Figure 4.

**Figure 4** is a schematic illustration of a specific implementation of the techniques of the present disclosure in which the patient 302 is moved longitudinally with respect to the imaging source and detector.

Figure 4 shows the initial position of the patient 302 (as also shown in Figure 3). A first CBCT acquisition is performed with the patient in this first position 302.

Figure 4 further shows the new position of the patient 302' after the longitudinal translation. A second CBCT acquisition is performed with the patient in this second position 302'.

Figure 4 depicts two FOVs corresponding to these two CBCT acquisitions, i.e., the FOV 310 of the imaging apparatus when the patient is in the initial position 302 and the field of view 310' of the imaging apparatus when the patient is in the new position 302'. Both fields of view 310, 310' are depicted with respect to the patient in the new position 302' in order to show the positions of the two FOVs relative to each other and relative to the patient 302'. Thus, it is shown that the new field of view 310' captures a different region of the patient's anatomy including, for example, the patient's neck. As shown in Figure 4, the translation of the patient (302 to 302') is chosen such that the two fields of view 310', 310 overlap.

**Figure 5A** is a reconstructed volume obtained by performing a method according to a specific implementation of the techniques of the present disclosure. The method is an example implementation of the methods 100, 200 described with reference to Figures 1 and 2.

A first CBCT scan was performed with the patient in a first position, e.g., as depicted in (and described with reference to) Figure 3.

The patient was moved to a second position by moving the patient couch in the longitudinal direction, as depicted in (and described with reference to) Figure 4. A second CBCT scan was performed with the patient in the second position.

A single iterative image reconstruction procedure was performed using the projections obtained in the first and second CBCT scans to generate a 3D reconstructed image 502 of a volume of the patient. Figure 5A shows a 2D view of the generated 3D image.

As described with reference to Figure 1, the iterative image reconstruction procedure was performed using the first plurality of 2D CBCT projections and the second plurality of 2D CBCT projections in a single iterative procedure. A subregion of the volume of the patient was represented in both the first plurality of 2D CBCT projections and the second plurality of 2D CBCT projections.

The reconstruction method that was used is an adaptation of the Polyquant iterative reconstruction method described in patent US11915346B2. Recall the update equation described with reference to Figure 1 in the case that both a weighting factor and a preconditioner is applied: ${x}^{k + 1} = {x}^{k} - \frac{Δ {A}^{T} WE}{Q}$

In the present example, the elementwise error function was: $E = \frac{y}{p \left({x}^{k}\right) + s} - 1$

The weighting factor, W, was a sinusoidal function: $0.5 \left(1-cos\left(\frac{πz}{δ}\right)\right)$ where *δ* is the width (in projection space) over which the tapering is applied and z is the position (on the detector in projection space) relative to the edge of the detector. Those skilled in the art will appreciate that other functions could be used for the error function. For example. in other examples, a linear function, step function or other tapered function could be used. *δ* is calculated (based on the geometry of the imaging beam) to correspond to the region of the detector onto which the subregion (i.e., overlap region) is projected. For a cone beam setup, this distance may be estimated as: $δ = d - s \frac{sdd}{sid}$ where *sdd* is the source to detector distance, *sid* is the distance from the source to the centre of rotation, *d* is the width of the detector and *s* is the translation distance (i.e., the couch shift). It is noted that, in the case of a parallel beam, this tapering width would be *δ* = *d* -*s*.

In the present example, the elementwise preconditioner was: $Q = {A}^{T} W \left(\frac{y - s}{y}\right) A p$ where 1 is a volume filled with ones.

This example demonstrates the benefits of the techniques of the present disclosure. It is noted that although this example used a longitudinal couch shift and a polyquant forward projection model, the benefits of the present disclosure can be achieved using couch shifts in any direction and using alternative forward projection models.

For comparison, **Figure 5B** shows an image of a reconstructed volume generated by volume stitching, as described below.

A first CBCT reconstruction was performed using the projections acquired from the first CBCT scan described with reference to Figure 5A to generate a first reconstructed volume.

A second CBCT reconstruction was performed using the projections acquired from the second CBCT scan described with reference to Figure 5A to generate a second reconstructed volume.

The first reconstructed volume and the second reconstructed volume were combined using post-reconstruction volume stitching (summing the first and second reconstructed volumes and normalising the spatial overlap). Figure 5B shows a 2D view of the generated 3D image 504.

As shown in Figure 5B, the volume stitching technique of the prior art fails to provide a complete reconstructed volume at the join between the first reconstructed volume and the second reconstructed volume. The gaps at the join (shown in Fig. 5B) reflect the conical end-capped cylindrical FOV illustrated in Figure 3. These gaps correspond to regions that were not sufficiently sampled in one scan to perform a reliable reconstruction (such regions were removed using a masking operation and giving rise to the conical end-capped cylindrical FOV).

A more complete reconstructed volume can be achieved with the volume stitching method by increasing the overlap between the first reconstructed volume and the second reconstructed volume, however this reduces the total field of view of the stitched image and increases the dose to the patient in the overlap region.. By instead implementing the techniques of the present disclosure, the projection data from the two scans are combined prior to reconstruction, thereby providing sufficient sampling to reliably reconstruct the regions that were missing in Fig. 5B (as shown in Fig. 5A).

As shown in Figures 5A and 5B, the techniques of the present disclosure achieve a more complete reconstructed volume than can be achieved using the volume stitching method. The overlap between the projections used to generate each image 502, 504 was the same, but the gapping in image 202 indicates that greater overlap is required to achieve a complete volume. In other words, the techniques of the present disclosure require a smaller overlap, and therefore provide a larger FOV than prior techniques.

The techniques of the present disclosure are also quicker. The reconstruction time for generating image 502 was 10 seconds, whereas the reconstruction time for generating image 504 was approximately 20 seconds (10 + 10 seconds).

Finally, the techniques used to generate image 504 provide resilience to motion between the two scans due to the tapered weighting factor creating a smooth blending between the two acquisitions.

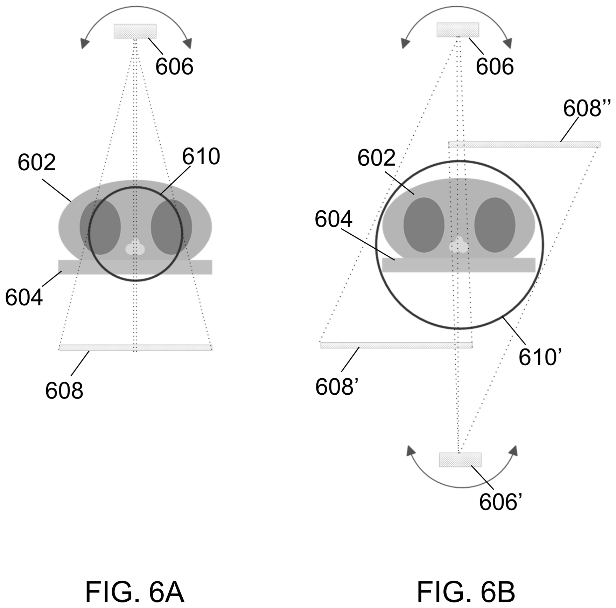

**Figure 6A** is a schematic illustration of a CBCT imaging setup looking down the rotation axis of the imaging system (in the lateral dimension).

A patient 602 is lying on a patient couch 604. The imaging system comprises an imaging source 606 and an imaging detector 608.

The lateral dimension FOV (i.e. the effective diameter of the 'swept volume') depends on the lateral positioning of the detector relative to the central beam axis (i.e., the detector offset).

In Figure 6A, the detector 608 is positioned opposite the imaging source 606 with no detector offset, resulting in the lateral FOV 610 shown. For example, the lateral field of view 610 for a 40x40 cm detector located 1.6 m from the source (and without further collimation) is a (roughly) cylindrical volume with a diameter of 26 cm.

**Figure 6B** is a schematic illustration of a CBCT imaging setup in the lateral dimension with a detector offset.

The detector 608' is offset relative to the imaging source 606 and the lateral field of view 610' is larger than the lateral FOV 610 that was achieved with the setup shown in Figure 6A. For example, for a 40x40 cm detector located 1.6m from the source (and without further collimation) with a detector offset of 190 mm (shown in Figure 6B), the lateral field of view 610' is a (roughly) cylindrical volume with a diameter of 51.4 cm.

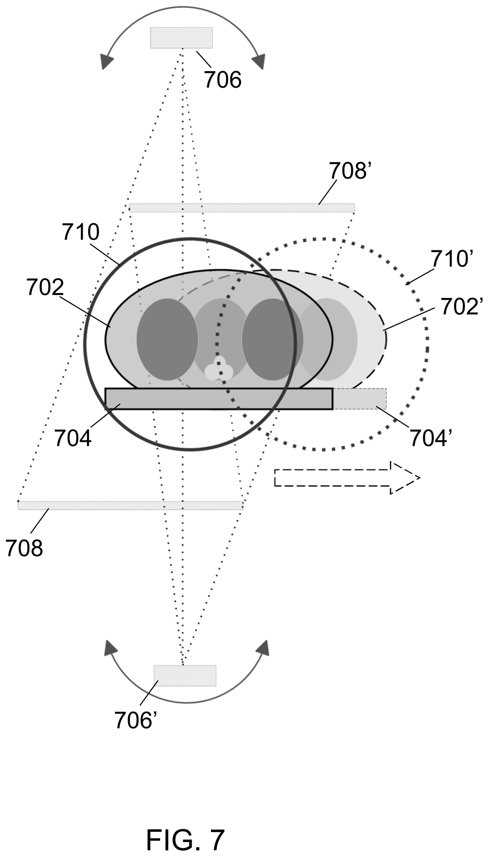

The FOV can be extended further using the techniques of the present disclosure, as shown in Figure 7.

**Figure 7** is a schematic illustration of a CBCT imaging setup in the lateral dimension according to techniques of the present disclosure.

Figure 7 shows the initial position of the patient 702 lying on the patient couch 704. A first CBCT acquisition is performed with the patient in this first position 702 with the detector 708 in an offset position relative to the imaging source 706. Figure 7 further shows the position of the source 706' and detector 708' after a 180-degree rotation.

The patient is moved in the lateral direction to position 702' (by moving the patient couch 704'). A second CBCT acquisition is performed with the patient in this second position 702'. The FOV 710' of this second CBCT acquisition is shown relative to the patient in the second position 702'. The FOV 710 of the first CBCT acquisition is also shown relative to the patient in the second position 702'.

The entire lateral patient cross section is captured in the combined FOV. Thus, using the reconstruction techniques disclosed herein, a larger lateral FOV is achieved.

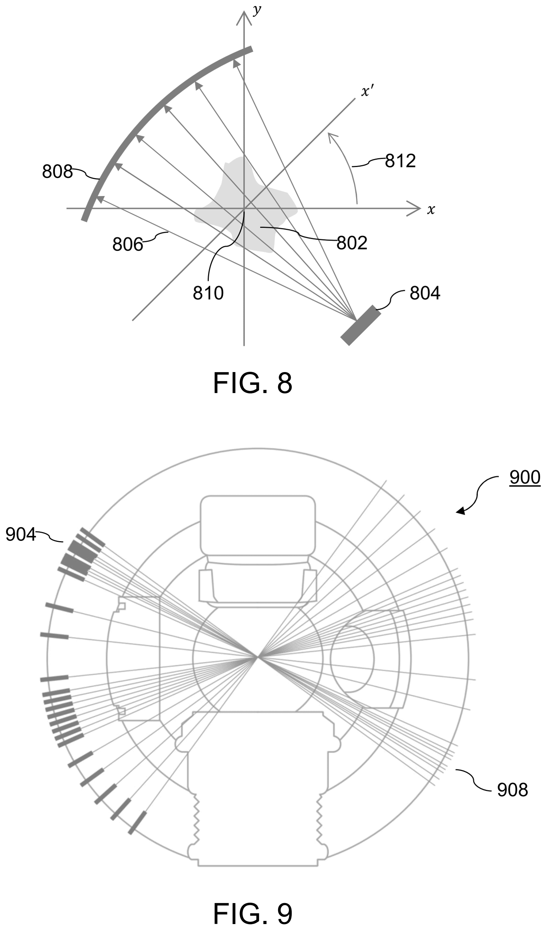

**Figure 8** illustrates the geometry of a typical cone beam projection acquisition setup, as may be used in image acquisition and image reconstruction techniques according to techniques of the present disclosure. For simplicity, only the x-y plane is illustrated; the skilled reader will appreciate that the beam of rays extends also into the z-axis, orthogonal to the x-y plane. In this example, the acquisition setup captures projection data (projections) of object 802 (which may, for example, be the patient). X-ray source 804 generates and emits X-rays 806 towards object 802. In CBCT, X-rays may be considered as a beam of rays, emitted from a point source. Detector (or detectors) 808 capture projections, which are sets of line integrals along paths that radiate from the source 804. Multiple projections of the image may be acquired from different angles by rotating the source 804 and detector 808 around the centre of the image 810. In the present example, the source 804 and detector 808 may be rotated arcuately along orbital path 812 (referred to herein as a scan arc or CBCT scan arc). In this way, the x-y plane may be rotated (counterclockwise or clockwise) around the point of origin (or centre of the image 810) in a manner that keeps the mutual positional relationship between source 804 and detector 808 when passing through the orbital path 812. Other configurations of imaging systems are, of course, feasible; for instance, the source may be configured to rotate and a complete ring of detectors may be configured to capture projections, or there may be multiple sources arranged circumferentially around a complete ring of detectors.

The attenuation of the intensity of the rays that pass through the object 802 may be measured by processing signals received from the detector 808. By making projective measurements at a series of different projection angles through the object 802, a sinogram may be constructed from the projection data, mapping the spatial dimension of the detector array to the projection angle dimension. The intensity attenuation resulting from a particular volume within the object will trace out a sine wave for the spatial dimension along the detector perpendicular to the rotation axis of the system. Volumes of the object farther from the centre of rotation correspond to sine waves with greater amplitudes than those corresponding to volumes nearer the centre of rotation. The phase of each sine wave in the sinogram corresponds to the relative angular positions with respect to the rotation axis. By performing an image reconstruction technique (such as an inverse Radon transform) on the projection data in the sinogram, one may reconstruct an image, where the reconstructed image corresponds to a cross-sectional slice or volume of the object 802. The detector 808 may comprise underlying detector elements (such as pixels or bins of pixels), rather than a single active region. The measured ray intensities may then be taken as a function of underlying intensity signals acquired at detector elements of the detector. This is advantageous in that one reduces the impact of random noise, which may plague an intensity (particularly a low intensity) measured at a single detector element. For example, the measured ray intensities may be an average (mean, mode or median) of underlying single detector element intensities.

**Figure 9** illustrates the geometry of a cone beam projection acquisition setup, as incorporated into a medical CT scanner 900. Radiation sources 904 emit beams of X-ray radiation, which may pass through the patient supported on a couch within the CT scanner (not depicted). Detectors 908 capture attenuated X-rays. The radiation sources 904 and detectors 908 may be configured to rotate within a gantry of the CT scanner, so as to acquire projective measurements at a series of different projection angles.

The CBCT projections in a CBCT image acquisition protocol are typically acquired at equidistant positions along a scan arc and with constant intensity and energy. However, as shown in Figure 9, the angular separation between measurement orientations need not be equal. For example, according to embodiments disclosed herein, a higher density of projection angles may be used to increase the image quality of the reconstructed CBCT image and to prioritise image quality for positions within the patient volume at which the RTP is sensitive to changes in anatomy. A set of densely sampled projections in a small sub arc may be combined with less densely sampled projections for the rest of the rotation to obtain improved image quality in some desired areas whilst minimising imaging dose. Information about optimising projection angle selection in Computed Tomography is provided in "Optimisation of projection angle selection in Computed Tomography" by Francien G. Bossema (Master Thesis Mathematics, University Leiden).

The image reconstruction method may account for flex within (or of) the gantry. For instance, in one implementation, the flex may be considered when determining where the isocentral ray hits the detector. In turn, the method may determine the intensity at the isocentral location through interpolation.

Referring back to the method of Figure 2, the first and second image acquisition procedure of steps 202 and 206 may be performed using the set up described above in relation to Figures 8 and 9.

**Figure 10** is a block diagram illustrating an example node 1000 which may implement the method 100 illustrated in Figure 1, according to examples of the present disclosure. For example, the node 1000 may implement the method 100 of Figure 1 on receipt of suitable instructions from a computer program 1050.

Referring to Figure 10 the node 1000 comprises a processor or processing circuitry 1002, a memory 1004, and may comprise and interfaces 1006. The processing circuitry 1002 is operable to perform some or all of the steps of the method 100 discussed above with reference to Figure 1. The memory 1004 may contain instructions executable by the processing circuitry 1002 such that the node 1000 is operable to perform some or all of the steps of the method 100 illustrated in Figure 1. The instructions may also include instructions for executing one or more telecommunications and/or data communications protocols. The instructions may be stored in the form of the computer program 1050. In some examples, the processor or processing circuitry 1002 may include one or more microprocessors or microcontrollers, as well as other digital hardware, which may include digital signal processors (DSPs), special-purpose digital logic, etc. The processor or processing circuitry 1002 may be implemented by any type of integrated circuit, such as an Application Specific Integrated Circuit (ASIC), Field Programmable Gate Array (FPGA) etc. The processor or processing circuitry 1002 may include a Graphics Processing Unit (GPU). The memory 1004 may include one or several types of memory suitable for the processor, such as read-only memory (ROM), random-access memory, cache memory, flash memory devices, optical storage devices, solid state disk, hard disk drive, etc.

In some examples as discussed above, the node 1000 may be incorporated into an imaging system, and examples of the present disclosure also provide an imaging system comprising the node as discussed above. The imaging system may comprise (or be comprised in) a radiotherapy treatment apparatus. The imaging system may be for image guided RT and/or ART.

**Figure 11** depicts a radiotherapy apparatus, suitable for performing radiotherapy treatment and/or image acquisition. The radiotherapy apparatus is an example of an imaging system described herein (e.g., the imaging system configured to perform the method 200 of Figure 2).

The cross-section through radiotherapy apparatus 1100 includes a radiation head 1110 and a beam receiving apparatus (detector) 1102, both of which are attached to a gantry 1104. The radiation head 1110 includes a radiation source 1112, which emits a beam of radiation 1106. The radiation head 1110 also includes a beam shaping apparatus 1118, which controls the size and shape of the radiation field associated with the beam.

The beam receiving apparatus 1102 is configured to receive radiation emitted from the radiation head 1110, for the purpose of absorbing and/or measuring the beam of radiation. In the view shown, the radiation head 1110 and the beam receiving apparatus 1102 are positioned diametrically opposed to one another.

The gantry 1104 is rotatable, and supports the radiation head 1110 and the beam receiving apparatus 1102 such that they are rotatable around an axis of rotation 1108, which may coincide with the patient longitudinal axis. The gantry provides rotation of the radiation head 1110 and the beam receiving apparatus 1102 in a plane perpendicular to the patient longitudinal axis (e.g., a sagittal plane). Three gantry directions *x_{G}, y_{G}*, *z_{G}* may be defined such that the *y_{G}* direction is perpendicular with the gantry axis of rotation. The *y_{G}* direction extends from a point on the gantry corresponding to the radiation head 1110, towards the axis of rotation of the gantry. Therefore, from the patient frame of reference, the *y_{G}* direction rotates around as the gantry rotates.

The radiotherapy apparatus 1100 also includes a support surface or couch 1120 on which a subject (or patient) is supported during radiotherapy treatment or image acquisition. The radiation head 1110 is configured to rotate around the axis of rotation 1108 such that the radiation head 1110 directs radiation towards the subject from various angles around the subject in order to spread out the radiation dose received by healthy tissue to a larger region of healthy tissue while building up a prescribed dose of radiation at a target region.

The radiotherapy apparatus 1100 is configured to deliver a radiation beam towards a radiation isocentre, which is substantially located on the axis of rotation 1108 at the centre of the gantry 1104 regardless of the angle at which the radiation head 1110 is placed.

The rotatable gantry 1104 and radiation head 1110 are dimensioned so as to allow a central bore 1122 to exist. The central bore 1122 provides an opening, sufficient to allow a subject to be positioned therethrough without the possibility of being incidentally contacted by the radiation head 1110 or other mechanical components as the gantry rotates the radiation head 1110 about the subject.

The radiation head 1110 emits the radiation beam 1106 along a beam axis 1124 (or radiation axis or beam path), where the beam axis 1124 is used to define the direction in which the radiation is emitted by the radiation head 1110. The radiation beam 1106 is incident on the beam receiving apparatus 1102, which may include at least one of a beam stopper and a radiation detector. The beam receiving apparatus 1102 is attached to the gantry 1104 on a diametrically opposite side to the radiation head 1110 to attenuate and/or detect a beam of radiation after the beam has passed through the subject.

The radiation beam axis 1124 may be defined as, for example, a centre of the radiation beam 1106 or a point of maximum intensity.

The beam shaping apparatus 1118 delimits the spread of the radiation beam 1106. The beam shaping apparatus 1118 is configured to adjust the shape and/or size of a field of radiation produced by the radiation source. The beam shaping apparatus 1118 does this by defining an aperture (also referred to as a window or an opening) of variable shape to collimate the radiation beam 1106 to a chosen cross-sectional shape. In this example, the beam shaping apparatus 1118 may be provided by a combination of a diaphragm and an MLC. Beam shaping apparatus 1118 may also be referred to as a beam modifier.

The radiotherapy apparatus 1100 may be configured to deliver both coplanar and non-coplanar (also referred to as tilted) modes of radiotherapy treatment. In coplanar treatment, radiation is emitted in a plane that is perpendicular to the axis of rotation of the radiation head 1110. In non-coplanar treatment, radiation is emitted at an angle that is not perpendicular to the axis of rotation. In order to deliver coplanar and non-coplanar treatment, the radiation head 1110 may move between at least two positions, one in which the radiation is emitted in a plane which is perpendicular to the axis of rotation (coplanar configuration) and one in which radiation is emitted in a plane which is not perpendicular to the axis of rotation (non-coplanar configuration).

In the coplanar configuration, the radiation head 1110 is positioned to rotate about a rotation axis and in a first plane. In the non-coplanar configuration, the radiation head is tilted with respect to the first plane such that a field of radiation produced by the radiation head is directed at an oblique angle relative to the first plane and the rotation axis. In the non-coplanar configuration, the radiation head 1110 is positioned to rotate in a respective second plane parallel to and displaced from the first plane. The radiation beam is emitted at an oblique angle with respect to the second plane, and therefore as the radiation head rotates the beam sweeps out a cone shape.

In one configuration, the beam receiving apparatus 1102 may remain in the same place relative to the rotatable gantry when the radiotherapy apparatus is in both the coplanar and non-coplanar modes. Therefore, the beam receiving apparatus 1102 is configured to rotate about the rotation axis in the same plane in both coplanar and non-coplanar modes. This may be the same plane as the plane in which the radiation head rotates. In alternative configurations, the beam receiving apparatus 1101 may also rotate.

The beam shaping apparatus 1110 is configured to reduce the spread of the field of radiation in the non-coplanar configuration in comparison to the coplanar configuration.

The radiotherapy apparatus 1100 includes a controller 1130, which is programmed to control the radiation source 1112, beam receiving apparatus 1106 and the gantry 1102. Controller 1130 may perform functions or operations such as radiotherapy treatment planning, treatment execution, image acquisition, image processing, motion tracking, motion management, and/or other tasks involved in a radiotherapy process.

Controller 1130 is programmed to control various components of apparatus 1100, such as gantry 1104, radiation head 1110, beam receiving apparatus 1102, and support surface 1120, so as to acquire projection data (i.e., projection images) suitable for image reconstruction.

Hardware components of controller 1130 may include one or more computers (e.g., general purpose computers, workstations, servers, terminals, portable/mobile devices, etc.); processors (e.g., central processing units (CPUs), graphics processing units (GPUs), microprocessors, digital signal processors (DSPs), field programmable gate arrays (FPGAs), special-purpose or specially-designed processors, etc.); memory/storage devices such as a memory (e.g., read-only memories (ROMs), random access memories (RAMs), flash memories, hard drives, optical disks, solid-state drives (SSDs), etc.); input devices (e.g., keyboards, mice, touch screens, mics, buttons, knobs, trackballs, levers, handles, joysticks, etc.); output devices (e.g., displays, printers, speakers, vibration devices, etc.); circuitries; printed circuit boards (PCBs); or other suitable hardware. Software components of controller 1130 may include operation device software, application software, etc.

The radiation head 1110 may be connected to a head actuator 1114, which is configured to actuate the radiation head 1110, for example between a coplanar configuration and one or more non-coplanar configurations, or for example to actuate the radiation source 1112 and/or detector 1102 in response to detection of flex. This may involve translation and rotation of the radiation head 1110 relative to the gantry. In some implementations, the head actuator may include a curved rail along which the radiation head 1110 may be moved to adjust the position and angle of the radiation head 1110. The controller 1130 may control the configuration of the radiation head 1130 via the head actuator 1114.

The beam shaping apparatus 1118 includes a shaping actuator 1116. The shaping actuator is configured to control the position of one or more elements in the beam shaping apparatus 1118 in order to shape the radiation beam 1106. In some implementations, the beam shaping apparatus 1116 includes an MLC, and the shaping actuator 1116 includes means for actuating leaves of the MLC. The beam shaping apparatus 1118 may further comprise a diaphragm, and the shaping actuator 1116 may include means for actuating blocks of the diaphragm. The controller 1130 may control the beam shaping apparatus 1118 via the shaping actuator 1116.

**Figure 12** illustrates a block diagram of one implementation of an imaging system 1200 comprising a computing system 1210 within which a set of instructions, for causing the computing system 1210 to perform any one or more of the methods discussed herein, may be executed.

The computing system 1210 shall be taken to include any number or collection of machines, e.g. computing device(s), that individually or jointly execute a set (or multiple sets) of instructions to perform any one or more of the methods discussed herein. That is, hardware and/or software may be provided in a single computing device, or distributed across a plurality of computing devices in the computing system. In some implementations, one or more elements of the computing system may be connected (e.g., networked) to other machines, for example in a Local Area Network (LAN), an intranet, an extranet, or the Internet. One or more elements of the computing system may operate in the capacity of a server or a client machine in a client-server network environment, or as a peer machine in a peer-to-peer (or distributed) network environment. One or more elements of the computing system may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine.

The computing system 1210 includes controller circuitry 1211 and a memory 1213 (e.g., read-only memory (ROM), flash memory, dynamic random access memory (DRAM) such as synchronous DRAM (SDRAM) or Rambus DRAM (RDRAM), etc.). The memory 1213 may comprise a static memory (e.g., flash memory, static random access memory (SRAM), etc.), and/or a secondary memory (e.g., a data storage device), which communicate with each other via a bus (not shown).

Controller circuitry 1211 represents one or more general-purpose processors such as a microprocessor, central processing unit, accelerated processing units, or the like. More particularly, the controller circuitry 1211 may comprise a complex instruction set computing (CISC) microprocessor, reduced instruction set computing (RISC) microprocessor, very long instruction word (VLIW) microprocessor, processor implementing other instruction sets, or processors implementing a combination of instruction sets. Controller circuitry 1211 may also include one or more special-purpose processing devices such as an application specific integrated circuit (ASIC), a field programmable gate array (FPGA), a digital signal processor (DSP), network processor, or the like. One or more processors of the controller circuitry may have a multicore design. Controller circuitry 1211 is configured to execute the processing logic for performing the operations and steps discussed herein.

The computing system 1210 may further include a network interface circuitry 1215. The computing system 1210 may be communicatively coupled to an input device 1220 and/or an output device 1230, via input/output circuitry 1217. In some implementations, the input device 1220 and/or the output device 1230 may be elements of the computing system 1210. The input device 1220 may include an alphanumeric input device (e.g., a keyboard or touchscreen), a cursor control device (e.g., a mouse or touchscreen), an audio device such as a microphone, and/or a haptic input device. The output device 1230 may include an audio device such as a speaker, a video display unit (e.g., a liquid crystal display (LCD) or a cathode ray tube (CRT)), and/or a haptic output device. In some implementations, the input device 1220 and the output device 1230 may be provided as a single device, or as separate devices.

In some implementations, the computing system 1210 may comprise image processing circuitry 1219. Image processing circuitry 1219 may be configured to process image data 1280 (e.g. images, or imaging data), such as medical images obtained from one or more imaging data sources, a treatment device 1250 and/or an image acquisition device 1240. Image processing circuitry 1219 may be configured to process, or pre-process, image data. For example, image processing circuitry 1219 may convert received image data into a particular format, size, resolution or the like. In some implementations, image processing circuitry 1219 may be combined with controller circuitry 1211.

In some implementations, the imaging system 1200 may comprise an image acquisition device 1240 and/or a treatment device 1250. The image acquisition device 1240 and the treatment device 1250 may be provided as a single device. In certain implementations, image acquisition device 1240 and treatment device 1250 are a combined radiotherapy device capable of delivering both therapeutic radiation and acquiring imaging data. In some implementations, treatment device 1250 is configured to perform imaging, for example in addition to providing treatment and/or during treatment. The treatment device 1250 comprises the main radiation delivery components of the radiotherapy system.

Image acquisition device 1240 may be configured to output image data 1280, which may be accessed by computing system 1210. Treatment device 1250 may be configured to output treatment data 1260, which may be accessed by computing system 1210.

Computing system 1210 may be configured to access or obtain treatment data 1260, planning data 1270 and/or image data 1280. Treatment data 1260 may be obtained from an internal data source (e.g. from memory 1213) or from an external data source, such as treatment device 1250 or an external database. Planning data 1270 may be obtained from memory 1213 and/or from an external source, such as a planning database. Planning data 1270 may comprise information obtained from one or more of the image acquisition device 1240 and the treatment device 1250.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may comprise a special-purpose processor, such as an FPGA or an ASIC. A hardware component may also include programmable logic or circuitry that is temporarily configured by software to perform certain operations.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "obtaining", "performing", " receiving", "determining", "comparing ", "enabling", "maintaining," "identifying," or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

The following numbered statements set out embodiments of the present disclosure.
1. A computer-implemented method (100) for generating a three-dimensional, 3D, reconstructed image of a patient, the method comprising:
   obtaining (102) a first plurality of two-dimensional, 2D, Cone Beam Computed Tomography, CBCT, projections of the patient, wherein the first plurality of 2D CBCT projections correspond to a first plurality of angular positions of a CBCT imaging source around a first centre of rotation with a first relative position of the patient with respect to the first centre of rotation;
   obtaining (104) a second plurality of 2D CBCT projections of the patient, wherein the second plurality of 2D CBCT projections correspond to a second plurality of angular positions of the CBCT imaging source around a second centre of rotation with a second relative position of the patient with respect to the second centre of rotation, wherein the second relative position is different to the first relative position; and
   performing (106), using the first and second plurality of 2D CBCT projections, an iterative image reconstruction procedure to generate a 3D reconstructed image of a volume of the patient, wherein a subregion of the volume of the patient is represented in both the first plurality of 2D CBCT projections and the second plurality of 2D CBCT projections.
2. The method of embodiment 1, wherein one or both of the first plurality of 2D CBCT projections and the second plurality of 2D CBCT projections correspond to a complete CBCT scan.
3. The method of embodiment 1 or 2, wherein performing (106) the iterative image reconstruction procedure comprises:
   generating a simulation of the first and second plurality of 2D CBCT projections using a current estimate 3D image of the patient volume;
   generating an error function in projection space as a function of the simulated 2D CBCT projections and the first and second plurality of 2D CBCT projections; and
   updating the current estimate 3D image of the patient volume based on the error function.
4. The method of embodiment 3, wherein performing (106) the iterative image reconstruction procedure further comprises:
   applying a weighting factor elementwise to the error function to generate a weighted error function, wherein one or more elements of the error function corresponding to positions in projection space that represent the subregion are weighted less than the remaining elements of the error function.
5. The method of embodiment 4, wherein updating the current estimate 3D image of the patient volume based on the error function comprises updating the current estimate 3D image of the patient volume based on the weighted error function.
6. The method of any one of embodiments 3-5, wherein a displacement direction from the first relative position to the second relative position is parallel to a rotation axis of the first and second plurality of 2D angular projections.
7. The method of embodiment 6 when dependent on embodiment 4 or 5, wherein the weighting factor for elements of the error function that correspond to positions in the first plurality of projections reduces as a function of position in the displacement direction, and the weighting factor for elements of the error function that correspond to positions in the second plurality of projections reduces as a function of position in the opposite direction to the displacement direction.
8. The method of any one of embodiments 1-5, wherein a displacement direction from the first relative position to the second relative position has at least a component that is parallel to a rotation axis of the first plurality of 2D angular projections.
9. The method of any one of embodiments 1-5 or 8, wherein a displacement direction from the first relative position to the second relative position has at least a component that is perpendicular to a rotation axis of the first plurality of 2D angular projections.
10. The method of any preceding embodiment, wherein performing (106) the iterative image reconstruction procedure comprises:
   generating an image update in image space;
   applying an element-wise preconditioner to the image update, wherein the preconditioner is a function of position in image space; and
   updating the current estimate 3D image of the patient volume using the preconditioned image update.
11. The method of any preceding embodiment, wherein the method further comprises, prior to performing (106) the iterative image reconstruction procedure:
   obtaining, from hardware position measurements, a first indication of the first relative position and a second indication of the second relative position for use in performing (106) the iterative image reconstruction procedure.
12. A method (200) performed by an imaging system for generating a three-dimensional, 3D, reconstructed image of a patient, the method comprising:
   performing (202) a first CBCT image acquisition procedure comprising acquisition of a first plurality of two-dimensional, 2D, Cone Beam Computed Tomography, CBCT, projections of the patient corresponding to a first plurality of angular positions of a CBCT imaging source around a first centre of rotation with a first relative position of the patient with respect to the first centre of rotation;
   moving (204) one or both of the patient and the CBCT imaging source to a second relative position of the patient with respect to a second centre of rotation of the CBCT imaging source;
   performing (206) a second CBCT image acquisition procedure comprising acquisition of a second plurality of 2D CBCT projections of the patient corresponding to a second plurality of angular positions of the CBCT imaging source around the second centre of rotation with the second relative position of the patient with respect to the second centre of rotation; and
   performing (208) an iterative image reconstruction procedure to generate a 3D reconstructed image of a volume of the patient, wherein the iterative image reconstruction procedure is performed using the first plurality of 2D CBCT projections and the second plurality of 2D CBCT projections, wherein a subregion of the volume of the patient is represented in both the first plurality of 2D CBCT projections and the second plurality of 2D CBCT projections.
13. The method of embodiment 12, wherein moving (204) one or both of the patient and the CBCT imaging source comprises moving the patient by moving a patient couch.
14. The method of embodiment 13, wherein the patient couch is moved remotely.
15. The method of embodiment 13 or 14, wherein a position of the patient during acquisition of the second plurality of 2D CBCT projections is a starting position for delivering radiotherapy treatment to the patient.
16. The method of embodiment 15, wherein moving (204) one or both of the patient and the CBCT imaging source comprises moving the CBCT imaging source and keeping a position of a patient couch that is supporting the patient unchanged.
17. The method of any one of embodiments 12-16, wherein performing (202) the first CBCT image acquisition procedure comprises acquiring the first plurality of 2D CBCT projections in a manner that is one of clockwise and anticlockwise, and wherein performing (206) the second CBCT image acquisition procedure comprises acquiring the second plurality of 2D CBCT projections in a manner that is the other one of clockwise and anticlockwise.
18. The method of any one of embodiments 12-17, wherein the method is performed responsive to a single user input command.
19. A node (1000) for generating a three-dimensional, 3D, reconstructed image of a patient, the node comprising: a memory (1004) storing computer-executable instructions; and processing circuitry (1002) configured to cause the node to:
   obtain a first plurality of two-dimensional, 2D, Cone Beam Computed Tomography, CBCT, projections of the patient, wherein the first plurality of 2D CBCT projections correspond to a first plurality of angular positions of a CBCT imaging source around a first centre of rotation with a first relative position of the patient with respect to the first centre of rotation;
   obtain a second plurality of 2D CBCT projections of the patient, wherein the second plurality of 2D CBCT projections correspond to a second plurality of angular positions of the CBCT imaging source around a second centre of rotation with a second relative position of the patient with respect to the second centre of rotation, wherein the second relative position is different to the first relative position; and
   perform, using the first and second plurality of 2D CBCT projections, an iterative image reconstruction procedure to generate a 3D reconstructed image of a volume of the patient, wherein a subregion of the volume of the patient is represented in both the first plurality of 2D CBCT projections and the second plurality of 2D CBCT projections.
20. The node (1000) of embodiment 19, wherein the processing circuitry is further configured to cause the node to carry out a method according to any one of embodiments 2 to 11.
21. An imaging system (1200) for generating a three-dimensional, 3D, reconstructed CBCT image of a patient, the imaging system comprising processing circuitry (1219) configured to cause the imaging system to:
   perform a first CBCT image acquisition procedure comprising acquisition of a first plurality of two-dimensional, 2D, Cone Beam Computed Tomography, CBCT, projections of the patient corresponding to a first plurality of angular positions of a CBCT imaging source around a first centre of rotation with a first relative position of the patient with respect to the first centre of rotation;
   move one or both of the patient and the CBCT imaging source to a second relative position of the patient with respect to a second centre of rotation of the CBCT imaging source;
   perform a second CBCT image acquisition procedure comprising acquisition of a second plurality of 2D CBCT projections of the patient corresponding to a second plurality of angular positions of the CBCT imaging source around the second centre of rotation with the second relative position of the patient with respect to the second centre of rotation; and
   perform an iterative image reconstruction procedure to generate a 3D reconstructed image of a volume of the patient, wherein the iterative image reconstruction procedure is performed using the first plurality of 2D CBCT projections and the second plurality of 2D CBCT projections, wherein a subregion of the volume of the patient is represented in both the first plurality of 2D CBCT projections and the second plurality of 2D CBCT projections.
22. The imaging system (1200) of embodiment 21, wherein the processing circuitry (1219) is further configured to cause the imaging system to carry out a method according to any one of embodiments 13 to 18.
23. The imaging system (1200) of embodiment 21 or 22, wherein the imaging system comprises a radiotherapy treatment device (1250).
24. A computer program product comprising a computer readable medium, the computer readable medium having computer readable code embodied therein, the computer readable code being configured such that, on execution by a suitable computer or processor, the computer or processor is caused to perform a method of any one of embodiments 1 to 11.

## Claims

1. A computer-implemented method (100) for generating a three-dimensional, 3D, reconstructed image of a patient, the method comprising:
obtaining (102) a first plurality of two-dimensional, 2D, Cone Beam Computed Tomography, CBCT, projections of the patient, wherein the first plurality of 2D CBCT projections correspond to a first plurality of angular positions of a CBCT imaging source around a first centre of rotation with a first relative position of the patient with respect to the first centre of rotation;
obtaining (104) a second plurality of 2D CBCT projections of the patient, wherein the second plurality of 2D CBCT projections correspond to a second plurality of angular positions of the CBCT imaging source around a second centre of rotation with a second relative position of the patient with respect to the second centre of rotation, wherein the second relative position is different to the first relative position; and
performing (106), using the first and second plurality of 2D CBCT projections, an iterative image reconstruction procedure to generate a 3D reconstructed image of a volume of the patient, wherein a subregion of the volume of the patient is represented in both the first plurality of 2D CBCT projections and the second plurality of 2D CBCT projections.

2. The method as claimed in claim 1, wherein one or both of the first plurality of 2D CBCT projections and the second plurality of 2D CBCT projections correspond to a complete CBCT scan.

3. The method as claimed in claim 1 or 2, wherein performing (106) the iterative image reconstruction procedure comprises:
generating a simulation of the first and second plurality of 2D CBCT projections using a current estimate 3D image of the patient volume;
generating an error function in projection space as a function of the simulated 2D CBCT projections and the first and second plurality of 2D CBCT projections; and
updating the current estimate 3D image of the patient volume based on the error function.

4. The method as claimed in claim 3, wherein performing (106) the iterative image reconstruction procedure further comprises:
applying a weighting factor elementwise to the error function to generate a weighted error function, wherein one or more elements of the error function corresponding to positions in projection space that represent the subregion are weighted less than the remaining elements of the error function.

5. The method as claimed in claim 4, wherein updating the current estimate 3D image of the patient volume based on the error function comprises updating the current estimate 3D image of the patient volume based on the weighted error function.

6. The method as claimed in any one of claims 3-5, wherein a displacement direction from the first relative position to the second relative position is parallel to a rotation axis of the first and second plurality of 2D angular projections.

7. The method of claim 6 when dependent on claim 4 or 5, wherein the weighting factor for elements of the error function that correspond to positions in the first plurality of projections reduces as a function of position in the displacement direction, and the weighting factor for elements of the error function that correspond to positions in the second plurality of projections reduces as a function of position in the opposite direction to the displacement direction.

8. The method as claimed in any one of claims 1-5, wherein a displacement direction from the first relative position to the second relative position has at least a component that is parallel to a rotation axis of the first plurality of 2D angular projections.

9. The method as claimed in any one of claims 1-5 or 8, wherein a displacement direction from the first relative position to the second relative position has at least a component that is perpendicular to a rotation axis of the first plurality of 2D angular projections.

10. The method as claimed in any preceding claim, wherein performing (106) the iterative image reconstruction procedure comprises:
generating an image update in image space;
applying an element-wise preconditioner to the image update, wherein the preconditioner is a function of position in image space; and
updating the current estimate 3D image of the patient volume using the preconditioned image update.

11. The method as claimed in any preceding claim, wherein the method further comprises, prior to performing (106) the iterative image reconstruction procedure:
obtaining, from hardware position measurements, a first indication of the first relative position and a second indication of the second relative position for use in performing (106) the iterative image reconstruction procedure.

12. A node (1000) for generating a three-dimensional, 3D, reconstructed image of a patient, the node comprising: a memory (1004) storing computer-executable instructions; and processing circuitry (1002) configured to cause the node to:
obtain a first plurality of two-dimensional, 2D, Cone Beam Computed Tomography, CBCT, projections of the patient, wherein the first plurality of 2D CBCT projections correspond to a first plurality of angular positions of a CBCT imaging source around a first centre of rotation with a first relative position of the patient with respect to the first centre of rotation;
obtain a second plurality of 2D CBCT projections of the patient, wherein the second plurality of 2D CBCT projections correspond to a second plurality of angular positions of the CBCT imaging source around a second centre of rotation with a second relative position of the patient with respect to the second centre of rotation, wherein the second relative position is different to the first relative position; and
perform, using the first and second plurality of 2D CBCT projections, an iterative image reconstruction procedure to generate a 3D reconstructed image of a volume of the patient, wherein a subregion of the volume of the patient is represented in both the first plurality of 2D CBCT projections and the second plurality of 2D CBCT projections.

13. The node (1000) as claimed in claim 12, wherein the processing circuitry is further configured to cause the node to carry out a method according to any one of claims 2 to 11.

14. A computer program product comprising a computer readable medium, the computer readable medium having computer readable code embodied therein, the computer readable code being configured such that, on execution by a suitable computer or processor, the computer or processor is caused to perform a method as claimed in any one of claims 1 to 11.
